# EUROPÄISCHE PATENTSCHRIFT

(11) **EP 2 387 593 B1**
(45) Veröffentlichungstag und Bekanntmachung des Hinweises auf die Patenterteilung: **13.08.2014**
(21) Anmeldenummer: 10700166.1
(22) Anmeldetag: 11.01.2010
(51) Int. Cl.: C07G 1/00

(54) **LIGNINDERIVAT UND DAS DERIVAT UMFASSENDER FORMKÖRPER**
LIGNINE DERIVATIVES AND MOULDED PARTS CONTAINING THE DERIVATIVE
DÉRIVÉ DE LIGNINE ET CORPS DE FORMAGE POURVU DU DÉRIVÉ

(30) Priorität: 15.01.2009 EP 09150619
(43) Veröffentlichungstag der Anmeldung: 23.11.2011
(73) Patentinhaber: Toho Tenax Europe GmbH, 42103 Wuppertal (DE); Fraunhofer-Gesellschaft zur Förderung der angewandten Forschung, 80686 München (DE)
(72) Erfinder: WOHLMANN, Bernd, 40627 Düsseldorf (DE); WÖLKI, Michael, 40219 Düsseldorf (DE); EBERT, Andreas, 14548 Schwielowsee (DE); ENGELMANN, Gunnar, 14478 Potsdam (DE); FINK, Hans-Peter, 14513 Teltow (DE)
(74) Vertreter: Schröder, Richard
(86) Internationale Anmeldenummer: PCT/EP2010/050185
(87) Internationale Veröffentlichungsnummer: WO 2010/081775

(56) Entgegenhaltungen:
- WO-A-2006/072119
- US-A- 3 905 926
- US-A1- 2008 317 661
- MCNAIR J J ET AL: "Properties of lignin esters" PAPER TRADE JOURNAL, VANCE PUBLISHING CO., LINCOLNSHIRE, IL, US, Bd. 117, Nr. 8, 19. August 1943 (1943-08-19), Seiten 29-33, XP009117945 ISSN: 0031-1197

## Beschreibung

Die vorliegende Erfindung betrifft ein Ligninderivat und das Derivat umfassende Formkörper und Kohlenstoff-Fasern hergestellt aus dem Formkörper.

Ligninderivate sind bekannt. US 3,519,581 beschreibt ein Verfahren, worin in einem Lösungsmittel aufgelöstes Lignin mit einem organischen Polyisocyanat umgesetzt wird. Als Folge des im entstehenden Ligninderivat enthaltenen Polyisocyanats hat das in US 3,519,581 beschriebene Ligninderivat einen duromeren Charakter.

Daher stellt sich die vorliegende Erfindung die Aufgabe, ein thermoplastisch verarbeitbares und fadenbildendes Ligninderivat zur Verfügung zu stellen.

Diese Aufgabe wird gelöst durch ein Ligninderivat hergestellt aus einem Lignin der Summenformel (1)

L(OH)_{z} (1),

worin
L ein Lignin ohne Hydroxylgruppen,
OH die an L gebundenen freien Hydroxylgruppen und
z 100 % der an L gebundenen freien Hydroxylgruppen
bedeutet,
wobei das Ligninderivat dadurch gekennzeichnet ist, dass im Ligninderivat x ≥ 0,1 % der an L gebundenen freien Hydroxylgruppen mit divalenten Resten Rₓ derivatisiert sind, die über eine Ester-, Ether- oder Urethangruppe mit L verknüpft sind,
y ≥ 0,1 % der an L gebundenen freien Hydroxylgruppen mit monovalenten Resten R_{y} derivatisiert sind, die von einer Verbindung abgeleitet sind, die zwei funktionelle Gruppen besitzt, von denen zur Bildung des Ligninderivats überwiegend beide jeweils über eine Ester-, Ether- oder Urethangruppe mit L verknüpft sind, x + y = 100 % und
z = 0 %
ist.

Das erfindungsgemäße Ligninderivat ist somit hinsichtlich der Hydroxylgruppen des Lignins, aus dem es hergestellt wurde, vollständig mit mono- und divalenten Resten derivatisiert. Dies bedeutet im Rahmen der vorliegenden Erfindung, dass im InfrarotSpektrum die Lignin-typischen OH-Banden, die im Bereich von etwa 3000 cm⁻¹ bis etwa 3500 cm⁻¹ liegen, im Rahmen der Messgenauigkeit nicht mehr nachweisbar sind.

Im erfindungsgemäßen Ligninderivat ist die chemische Art der Verknüpfung der divalenten Reste mit L unabhängig von der chemischen Art der Verknüpfung der monovalenten Reste mit L. Dies bedeutet, dass,
- wenn die divalenten Reste über Estergruppen mit L verknüpft sind, die monovalenten Reste entweder ebenfalls über Estergruppen oder über Ethergruppen oder über Urethangruppen mit L verknüpft sein können,
- wenn die divalenten Reste über Ethergruppen mit L verknüpft sind, die monovalenten Reste entweder ebenfalls über Ethergruppen oder über Estergruppen oder über Urethangruppen mit L verknüpft sein können,
- wenn die divalenten Reste über Urethangruppen mit L verknüpft sind, die monovalenten Reste entweder ebenfalls über Urethangruppen oder über Estergruppen oder über Ethergruppen mit L verknüpft sein können.

Das erfindungsgemäße Ligninderivat ist thermoplastisch verarbeitbar und fadenbildend. Ferner ist das erfindungsgemäße Ligninderivat in einigen Ausführungsformen, z.B. in solchen, in denen die divalenten Reste Rₓ von einem Oligomer, wie z.B. von einem Oligoester oder von einem Oligourethan abstammen, und die im folgenden noch näher erläutert werden, teilweise elastisch.

Vorzugsweise weist das erfindungsgemäße Ligninderivat eine Glastemperatur T_{g} im Bereich von - 30°C bis 200°C, besonders bevorzugt im Bereich von - 10°C bis 170 °C auf.

In einer weiteren bevorzugten Ausführungsform weist das erfindungsgemäße Ligninderivat ein Gewichtsmittel des Molekulargewichts auf, das mindestens 10 000 g/mol und besonders bevorzugt mindestens 20 000 g/mol beträgt. Für die obere Grenze ist ein Bereich von etwa 80 000 g/mol bis etwa 150 000 g/mol bevorzugt.

Ferner ist es bevorzugt, dass im erfindungsgemäßen Ligninderivat x im Bereich von 1 % bis 99 % und y im Bereich von 99 % bis 1 % liegt, wobei x im Bereich von 10 % bis 90 % und y im Bereich von 90 % bis 10 % besonders und x im Bereich von 20 % bis 80 % und y im Bereich von 80 % bis 20 % ganz besonders bevorzugt ist, jedoch in jedem Fall unter der Bedingung, dass x + y = 100 % ist.

Im erfindungsgemäßen Ligninderivat sind die divalenten Reste Rₓ von einer Verbindung abgeleitet, die zwei funktionelle Gruppen besitzt, von denen zur Bildung des Ligninderivats überwiegend beide jeweils über eine Ester-, Ether- oder Urethanbindung mit L verknüpft sind. Dabei sind die zwei funktionellen Gruppen vorzugsweise Endgruppen, d.h. Gruppen, die an der Verbindung, von denen die Reste Rₓ abgeleitet sind, in α,ω-Position gebunden sind.

In einer weiteren bevorzugten Ausführungsform des erfindungsgemäßen Ligninderivats sind die divalenten Reste Rₓ von einer Verbindung abgeleitet, die zwei gleiche funktionelle Gruppen umfasst, besonders bevorzugt besitzt, von denen zur Bildung des Ligninderivats überwiegend beide jeweils über eine Ester-, Ether- oder Urethanbindung mit L verknüpft sind. Dabei bedeutet "überwiegend", dass mehr als 50 % der zwei gleichen funktionellen Gruppen jeweils über eine Ester-, Ether- oder Urethanbindung mit L verknüpft sind. Ferner sind die zwei gleichen funktionellen Gruppen vorzugsweise Endgruppen, d.h. Gruppen, die an der Verbindung, von denen die Reste Rₓ abgeleitet sind, in α,ω-Position gebunden sind.

In einer besonders bevorzugten Ausführungsform des erfindungsgemäßen Ligninderivats sind mindestens 20 %, ganz besonders bevorzugt mindestens 60 % der zwei gleichen funktionellen Gruppen jeweils über eine Ester-, Ether oder Urethangruppe mit L verknüpft. Dabei sind die zwei gleichen funktionellen Gruppen vorzugsweise Endgruppen, d.h. Gruppen, die an der Verbindung, von denen die Reste Rₓ abgeleitet sind, in α,ω-Position gebunden sind.

In einer weiteren bevorzugten Ausführungsform des erfindungsgemäßen Ligninderivats stammen die divalenten Reste Rₓ von einer Dicarbonsäure, besonders bevorzugt von einer aktivierten Dicarbonsäure wie z.B. von einem Dicarbonsäurechlorid ab, wobei mindestens eine Carbonsäuregruppe bzw. mindestens eine Carbonsäurechloridgruppe der Dicarbonsäure bzw. des Dicarbonsäurechlorids über eine Estergruppe mit L verknüpft ist. Besonders bevorzugt sind beide aktivierten Carbonsäuregruppen bzw. beide Carbonsäurechloridgruppen der Dicarbonsäure bzw. des Dicarbonsäurechlorids über beide Estergruppen mit L verknüpft. Dabei kann die Dicarbonsäure ausgewählt sein aus der Gruppe der
- gesättigten aliphatischen Dicarbonsäuren der allgemeinen Formel HOOC-(CH₂)ₙ-COOH, wobei n Werte im Bereich von 1 bis 20 und jeden zwischen 1 und 20 liegenden Wert annehmen kann,
- ungesättigten aliphatischen Dicarbonsäuren,
- aliphatischen Carbonsäuren mit aliphatischen und/oder aromatischen Seitengruppen und
- aromatischen Dicarbonsäuren, wie z.B. Phenylendicarbonsäuren.

In einer weiteren bevorzugten Ausführungsform des erfindungsgemäßen Ligninderivats stammen die divalenten Reste Rₓ von einem Oligoester mit zwei vorzugsweise aktivierten Carbonsäureendgruppen ab, wobei mindestens eine Carbonsäureendgruppe des Oligoesters über eine Estergruppe mit L verknüpft ist. Vorzugsweise sind beide aktivierten Carbonsäureendgruppen des Oligoesters über jeweils eine Estergruppe mit L verknüpft. Dabei können die Oligoester durch Kondensation von
- aliphatischen Dicarbonsäuren mit aliphatischen Diolen,
- aromatischen Dicarbonsäuren mit aliphatischen Diolen,
- aliphatischen Dicarbonsäuren mit aromatischen Diolen und
- aromatischen Dicarbonsäuren mit aromatischen Diolen
hergestellt worden sein. Ferner können Gemische von jeweils aliphatischen und aromatischen Vertretern der o.g. Monomertypen zur Herstellung des Oligoesters eingesetzt werden. Besonders bevorzugt wird ein Kondensat aus einer aliphatischen oder aromatischen Dicarbonsäure mit aliphatischen Diolen eingesetzt. Als Diole für den Oligoester können gesättigte und ungesättigte α,ω̅-Diole mit 2-18 Kohlenstoffatomen oder aromatische Diole wie Hydrochinon oder 4,4'-Dihydroxy,1,1'-biphenyl verwendet werden. Auch verzweigte Diole können zur Herstellung des Oligoesters eingesetzt werden. Als Diole können ebenso Oligo- oder Polyesterdiole bzw. Oligo- oder Polyetherdiole eingesetzt werden. Als Dicarbonsäure können die vorstehend aufgeführten Dicarbonsäuren eingesetzt werden. Das Molverhältnis von Dicarbonsäure zu Diol im Oligoester liegt vorzugsweise im Bereich von 1 bis 2, besonders bevorzugt im Bereich von 1,1 bis 1,9.

In einer weiteren bevorzugten Ausführungsform des erfindungsgemäßen Ligninderivats stammen die divalenten Reste Rₓ von einem Diisocyanat ab, wobei mindestens eine Isocyanatgruppe des Diisocyanats über eine Urethangruppe mit L verknüpft ist. Vorzugsweise sind beide Isocyanatgruppen des Diisocyanats über eine Urethangruppe mit L verknüpft. Dabei kann das Diisocyanat ausgewählt sein aus der Gruppe der
- gesättigten aliphatischen Diisocyanate der allgemeinen Formel O=C=N-(CH₂)ₙ-N=C=O, wobei n Werte im Bereich von 2 bis 18 und jeden zwischen 2 und 18 liegenden Wert annehmen kann,
- verzweigten Diisocyanate,
- cyclischen gesättigten oder partiell ungesättigten Diisocyanate wie Isophorondiisocyanat oder
- aromatischen Diisocyanate wie TDI, d.h. 2,4-Toluoldiisocyanat oder MDI, d.h. 4,4'-Methylen-bis-(phenylisocyanat).

Die Isocyanatgruppen können auch mit Schutzgruppen versehen sein, z.B. mit Schutzgruppen aus der Gruppe der aliphatischen oder aromatischen Alkohole, Amide oder Thiole.

In einer weiteren bevorzugten Ausführungsform des erfindungsgemäßen Ligninderivats stammen die divalenten Reste Rₓ von einem Oligourethan mit zwei Isocyanatendgruppen ab, wobei mindestens eine Isocyanatendgruppe des Oligourethans über eine Urethangruppe mit L verknüpft ist. Dabei können zur Herstellung des Oligourethans die vorstehend aufgeführten Diisocyanate und Diole eingesetzt werden. Das Molverhältnis von Diisocyanat zu Diol liegt vorzugsweise im Bereich von 1 bis 2, besonders bevorzugt im Bereich von 1,1 bis 1,9.

In einer weiteren bevorzugten Ausführungsform des erfindungsgemäßen Ligninderivats stammen die monovalenten Reste R_{y} von einer vorzugsweise aktivierten Monocarbonsäure, wie z. B. von einem Monocarbonsäurechlorid oder von einem Monoisocyanat ab, wobei die vorzugsweise aktivierte Monocarbonsäure über eine Estergruppe bzw. das Monoisocyanat über eine Urethangruppe mit L verknüpft ist und wobei die aktivierte Monocarbonsäure auch als Säureanhydrid eingesetzt werden kann. Dabei kann die Monocarbonsäure ausgewählt sein aus der Gruppe der
- linearen gesättigten aliphatischen Monocarbonsäuren der allgemeinen Formel CH₃-(CH₂)ₙ-COOH, wobei n Werte im Bereich von 0 und 21 und jeden zwischen 0 und 21 liegenden Wert annehmen kann,
- verzweigten gesättigen aliphatischen Carbonsäuren, wobei die Verzweigung z.B. durch eine i-Propyl-, i-Butyl- oder tert.-Butylgruppe bewirkt sein kann,
- ungesättigten aliphatischen Monocabonsäuren, wie z.B. Monocarbonsäuren mit einer oder mehreren Doppelbindungen im aliphatischen Rest, wie Acrylsäure, Methacrylsäure oder Crotonylsäure,
- Monocarbonsäuren mit einem aromatischen oder araliphatischen Rest, der aus einem oder mehreren Ringen bestehen kann, wobei die Ringgröße je Ring zwischen 4 und 8 Ringatomen liegen kann, wobei die Ringatome entweder ausschließlich C-Atome oder C-Atome in Kombination mit Hereroatomen wie O, S, N und P sind, und wobei die Ringe durch Einfach-, Doppel- oder Dreifachbindungen miteinander verknüpft sein können oder in annelierter Form oder in beiden Verknüpfungsarten vorliegen können, wie Phenyl-, Zinnamat, (1,2)-Naphthyl-, Anthracenyl, Phenantryl-, Biphenyl-, Terphenyl-, Bithiophenyl-, Terthiophenyl-, Bipyrrolyl- oder Terpyrrolyl- usw...

Auch Gemische der o.g. Monocarbonsäuren bzw. Monoisocyanate können als monovalente Reste R_{y} eingesetzt werden. Für den Rest der o.g. Monoisocyanate gilt sinngemäß das Gleiche wie für den Rest der o.g. Monocarbonsäuren.

Zur Herstellung des erfindungsgemäßen Ligninderivats können Lignine beliebigen Ursprungs eingesetzt werden, wie z.B. Lignine, die aus Laub-, Nadelhölzern sowie aus Einjahrespflanzen gewonnen werden. Die Gewinnung dieser Lignine erfolgt durch Aufschlussverfahren, worin das Lignin
- entweder mit organischen Lösungsmitteln aus dem Holz extrahiert wird, wobei ein Katalysator eingesetzt werden kann, wie beim Organosolv-Verfahren,
- oder durch die Behandlung von Holz unter basischen oder sauren Bedingungen vollständig oder teilweise von der Cellulose getrennt wird, wie z.B. beim industriell verwendeten Kraft-Prozess.

Zur Herstellung des erfindungsgemäßen Ligninderivats wird vorzugsweise reines Lignin eingesetzt. Im Rahmen der vorliegenden Erfindung bedeutet "reines Lignin", dass das zur Herstellung des erfindungsgemäßen Ligninderivats eingesetzte Lignin vorzugsweise höchstens 5 Gew.-%, besonders bevorzugt höchstens 1 Gew.-% und ganz besonders bevorzugt höchstens 0,5 Gew.-% andere Bestandteile, wie z.B. Cellulose, Hemicellulose oder anorganische Salze, enthält. Folglich wird das erfindungsgemäße Ligninderivat vorzugsweise aus einem Lignin hergestellt, das einen Reinheitsgrad von vorzugsweise mindestens 95 Gew.-%, besonders bevorzugt von mindestens 99 Gew.-% und ganz besonders bevorzugt von mindestens 99,5 Gew.-% aufweist.

Zur Herstellung des erfindungsgemäßen Ligninderivats kann man so vorgehen, dass das jeweils ausgewählte Lignin zuerst mit dem jeweils ausgewählten divalenten Rest Rₓ derivatisiert wird, wobei x % der an L gebundenen freien Hydroxylgruppen über eine Ester-, Ether- oder Urethangruppe mit dem divalenten Rest Rₓ verknüpft werden, wonach die noch verbliebenen y % der an L gebundenen freien Hydroxylgruppen mit dem jeweils ausgewählten monovalenten Rest Ryderivatisiert werden, sodass y % der an L gebundenen freien Hydroxylgruppen über eine Ester-, Ether- oder Urethangruppe mit dem monovalenten Rest Rₓ verknüpft sind und z = 0 % ist.

Alternativ kann man zur Herstellung des erfindungsgemäßen Ligninderivats kann man so vorgehen, dass das jeweils ausgewählte Lignin zuerst mit dem jeweils ausgewählten monovalenten Rest R_{y} derivatisiert wird, wobei y % der an L gebundenen freien Hydroxylgruppen über eine Ester-, Ether- oder Urethangruppe mit dem monovalenten Rest R_{y} verknüpft werden, wonach die noch verbliebenen x % der an L gebundenen freien Hydroxylgruppen mit dem jeweils ausgewählten divalenten Rest Rₓderivatisiert werden, sodass x % der an L gebundenen freien Hydroxylgruppen über eine Ester-, Ether- oder Urethangruppe mit dem divalenten Rest R_{y} verknüpft sind und z = 0 % ist.

Die vorstehend genannten Derivatisierungsreaktionen, die zum erfindungsgemäßen Ligninderivat führen, können katalytisch beschleunigt werden. Z.B. kann die Esterbildung mit 1-Methylimidazol beschleunigt werden.

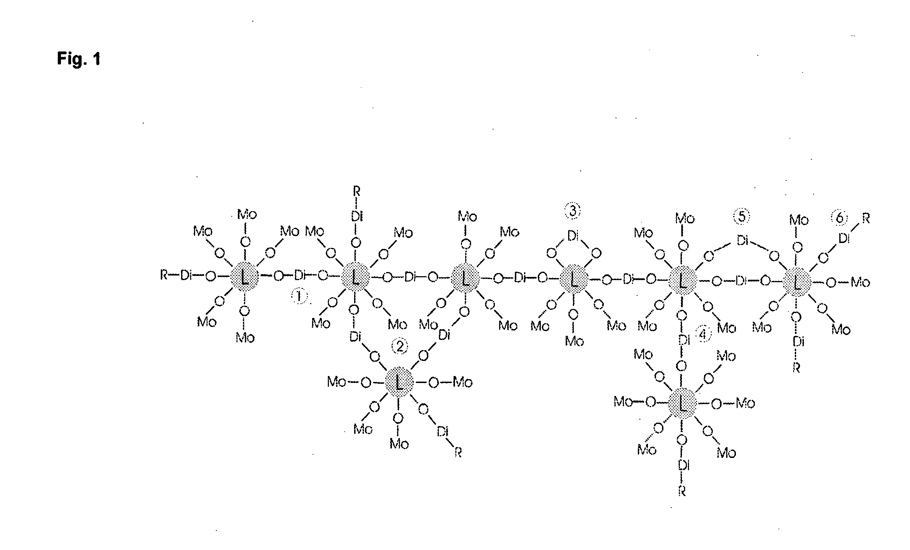

Das resultierende erfindungsgemäße Ligninderivat kann die in Fig. 1 schematisch dargestellte Struktur aufweisen. Darin bedeutet L Lignin ohne Hydroxylgruppen, O das Sauerstoffatom, das Teil einer Ester-, Ether- oder Urethanbindung ist, worüber der jeweilige divalente Rest Rₓ, der in Fig. 1 mit "Di" bezeichnet ist, mit L verknüpft ist und "Mo" den jeweiligen monovalenten Rest R_{y}, der über ein Sauerstoffatom O, das Teil einer Ester-, Ether- oder Urethanbindung ist, mit L verknüpft ist. In Fig. 1 bezeichnet das Bezugszeichen
- 1 eine einfache lineare Verknüpfung,
- 2 eine Vernetzung,
- 3 eine Schlaufenbildung,
- 4 eine Verzweigung (bezogen auf die Hauptkette),
- 5 eine doppelte lineare Verknüpfung und
- 6 eine divalente Einheit, die nur mit einer ihrer Endgruppen über O mit L verknüpft ist, so dass ihre zweite mit "R" bezeichnete Endgruppe frei ist.

Wie bereits erwähnt, ist das erfindungsgemäße Ligninderivat thermoplastisch verarbeitbar. Deshalb ist ein Formkörper, der das erfindungsgemäße Ligninderivat umfasst, ebenfalls Teil der vorliegenden Erfindung. Der erfindungsgemäße Formkörper kann durch thermoplastische Verarbeitung wie z.B. durch Kneten, Extrudieren, Schmelzspinnen oder Spritzgießen des erfindungsgemäßen Ligninderivats im Bereich von 30 °C bis 250 °C hergestellt werden. Im Bereich höherer Verarbeitungstemperaturen von vorzugsweise etwa 150 °C bis 250 °C kann die Verarbeitung des erfindungsgemäßen Ligninderivats zum erfindungsgemäßen Formkörper unter einer Inertgasatmosphäre durchgeführt werden.

In einer bevorzugten Ausführungsform liegt der erfindungsgemäße Formkörper in Gestalt einer Faser vor.

In besonders bevorzugten Ausführungsformen, z.B.
- in einer Ausführungsform, worin die Faser ein erfindungsgemäßes Ligninderivat umfasst, dessen divalente Reste Rₓ von einem Oligoester mit zwei Carbonsäureendgruppen abstammen, wobei mindestens eine Carbonsäureendgruppe des Oligoesters über eine Estergruppe mit L verknüpft ist oder
- in einer weiteren Ausführungsform, worin die Faser ein erfindungsgemäßes Ligninderivat umfasst, dessen divalente Reste Rₓ von einem Diisocyanat abstammen, wobei mindestens eine Isocyanatgruppe des Diisocyanats über eine Urethangruppe mit L verknüpft ist,
ist die Faser eine Precursorfaser zur Herstellung einer Kohlenstoff-Faser.

In einer weiteren bevorzugten Ausführungsform liegt der erfindungsgemäße Formkörper in Gestalt einer Folie, besonders bevorzugt als semipermeable Membran vor. Diese Membran ist besonders bevorzugt ein Batterieseparator.

Die Herstellung einer Kohlenstoff-Faser aus der erfindungsgemäßen Precursorfaser erfolgt durch die aufeinanderfolgenden Prozess-Schritte der Oxidation und der Karbonisierung, wonach als dritter Prozess-Schritt die Graphitisierung durchgeführt werden kann.

Der Prozess-Schritt der Oxidation findet unter oxidierender Atmosphäre, bevorzugt unter Luft oder Ozon statt. Die Oxidation kann ein- oder mehrstufig erfolgen, wobei die eine Oxidationsstufe bzw. die mehreren Oxidationsstufen jeweils in einem Temperaturbereich von 150 °C bis 400 °C, bevorzugt in einem Temperaturbereich zwischen 180 °C bis 250 °C durchgeführt werden können. Die Aufheizgeschwindigkeit während der jeweiligen Prozess-Stufe(n) liegt im Bereich von 0,1 K/min bis 10 K/min, bevorzugt im Bereich von 0,2 K/min bis 5 K/min. Der Prozess-Schritt der Oxidation wandelt die erfindungsgemäße thermoplastische Precursorfaser in eine erfindungsgemäße nichtthermoplastische Faser um, die als stabilisierte Faser bezeichnet wird.

Der an die Oxidation anschließende Prozess-Schritt der Karbonisierung der erfindungsgemäßen stabilisierten Faser erfolgt unter Inertgasatmosphäre, bevorzugt unter Stickstoff. Die Karbonisierung kann in einer oder in mehreren Stufen durchgeführt werden. Während der Karbonisierung wird die stabilisierte Faser mit einer Aufheizgeschwindigkeit aufgeheizt, die im Bereich von 10 K/s bis 5 K/min, bevorzugt im Bereich von 5 K/s bis 5 K/min liegt. Die Endtemperatur der Karbonisierung kann bei einem Wert von bis zu 1800 °C liegen. Der Prozess-Schritt der Karbonisierung wandelt die erfindungsgemäße stabilisierte Faser in eine erfindungsgemäße karbonisierte Faser um, d.h. in eine Faser, deren faserbildendes Material Kohlenstoff ist.

Im Anschluss an die Karbonisierung kann die erfindungsgemäße karbonisierte Faser in der Prozessstufe der Graphitisierung weiter veredelt werden. Dabei kann die Graphitisierung einstufig durchgeführt werden, wobei die erfindungsgemäße karbonisierte Faser in einer Atmosphäre, die aus einem einatomigen Inertgas, vorzugsweise aus Argon, besteht, bei einer Aufheizgeschwindigkeit im Bereich von vorzugsweise 5 K/s bis 5 K/min auf eine Temperatur von beispielsweise bis zu 3000 °C erhitzt wird. Der Prozess-Schritt der Graphitisierung wandelt die erfindungsgemäße karbonisierte Faser in eine erfindungsgemäße graphitisierte Faser um. Die Durchführung der Graphitisierung unter Verstreckung der erfindungsgmäßen karbonisierten Faser führt zu einem deutlichen Anstieg des Elastizitätsmoduls der resultierenden erfindungsgemäßen graphitisierten Faser. Deshalb wird die Graphitisierung der erfindungsgemäßen karbonisierten Faser vorzugsweise unter gleichzeitiger Verstreckung der Faser durchgeführt.

In der vorliegenden Erfindung werden x und y durch ¹³C-NMR-Spektroskopie bestimmt, wobei die ¹³C-Signale in einer DMSO-Lösung bei 80°C bestimmt werden.

In der vorliegenden Erfindung wird die Glastemperatur T_{g} durch DSC-Untersuchungen (DSC = Differential Scanning Calorimetry) bestimmt, wobei die im zweiten Scan mit einer Aufheizgeschwindigkeit von 10 K/min ermittelten Werte verwendet werden.

In der vorliegenden Erfindung werden das Gewichtsmittel des Molekulargewichts M_{w} und das Zahlenmittel des Molekulargewichts Mₙ durch Gelpermeationschromatographie (GPC) bestimmt, wobei Dimethylsulfoxid als Lösungsmittel dient.

Die vorliegende Erfindung wird anhand der folgenden Beispiele näher beschrieben.

### Beispiel 1

10 g Laubholz-Lignin mit einem Reinheitsgrad von 99,5 Gew.-% werden bei 80 °C 16 Stunden lang im Vakuum über P₄O₁₀ getrocknet. Das getrocknete Lignin wird in 50 ml absolutem Dimethylacetamid gelöst und mit 3,935 g (38,89 mmol) Triethylamin versetzt.

Separat dazu wird eine zweite Lösung von 3,56 g (19,44 mmol) Adipinsäuredichlorid in 20 ml absolutem Dimethylacetamid vorbereitet und langsam unter Inertgasatmosphäre, intensivem Rühren und Eiswasserkühlung zur vorstehend beschriebenen Lignin-Lösung getropft. Nach 10 Minuten intensiver Vermischung erfolgt die Zugabe eines Überschusses von Propionsäureanhydrid zusammen mit 0,5 g 1-Methylimidazol. Danach wird auf 50 °C erwärmt und der Reaktionsansatz zwei Stunden lang bei dieser Temperatur gerührt. Im Anschluss daran lässt man auf Raumtemperatur abkühlen, gibt die resultierende viskose Lösung in ca. 500 ml Ethanol, rührt eine Stunde lang und filtriert abschließend, wobei das Filtrat durch Eintropfen in Wasser auf Vollständigkeit der Fällung geprüft wird. Es resultiert ein Filterkuchen, der dreimal mit je 200 ml Ethanol/Wasser (9/1) in der Hitze ausgekocht, d.h. beim Siedepunkt des Ethanol/Wasser-Gemischs gereinigt wird und danach noch einmal mit Ethanol ausgekocht, d.h. beim Siedepunkt des Ethanols nachgereinigt wird. Nach Trockung an Luft wird bis zu Massekonstanz unter Vakuum getrocknet. Es werden 4,5 g Ligninderivat A ausgewogen. Das Ligninderivat A hat eine Glastemperatur T_{g} von 132 °C, ein Gewichtsmittel des Molekulargewichts M_{w} von 10100 g/mol, eine Polydispersität P = M_{w}/Mₙ von 5,6 und weist ein Verhältnis von monovalentem Rest / divalentem Rest von 62% / 38% auf. Mit ¹³C-NMR-Spektroskopie wird bestimmt, dass 85 % der beiden funktionellen Endgruppen des Adipinsäuredichlorids mit L über eine Esterbindung verknüpft sind.

### Beispiel 2

10 g Laubholz-Lignin mit einem Reinheitsgrad von 99,5 Gew.-% werden bei 80 °C 16 Stunden lang im Vakuum über P₄O₁₀ getrocknet. Das getrocknete Lignin wird in 50 ml absolutem Dimethylacetamid gelöst und mit 7,308 g (72,22 mmol) Triethylamin versetzt.

Separat dazu wird eine zweite Lösung von 6,61 g (36,11 mmol) Adipinsäuredichlorid in 20 ml absolutem Dimethylacetamid vorbereitet und langsam unter Inert-gasatmosphäre, intensivem Rühren und Eiswasserkühlung zur vorstehend beschriebenen Lignin-Lösung getropft. Nach 10 Minuten intensiver Vermischung der Lignin-Lösung mit der Adipinsäuredichlorid-Lösung erfolgt die Zugabe eines Überschusses von Propionsäureanhydrid zusammen mit 0,5 g 1-Methylimidazol. Danach wird auf 50 °C erwärmt und der Reaktionsansatz zwei Stunden lang bei dieser Temperatur gerührt. Im Anschluss daran lässt man auf Raumtemperatur abkühlen, gibt die resultierende viskose Lösung in ca. 500 ml Ethanol, rührt eine Stunde lang und filtriert abschließend, wobei das Filtrat durch Eintropfen in Wasser auf Vollständigkeit der Fällung geprüft wird. Es resultiert ein Filterkuchen, der dreimal mit je 200 ml Ethanol/Wasser (9/1) in der Hitze ausgekocht, d.h. beim Siedepunkt des Ethanol/Wasser-Gemischs gereinigt wird und danach noch einmal mit Ethanol ausgekocht, d.h. beim Siedepunkt des Ethanols nachgereinigt wird. Nach Trocknung an Luft wird bis zu Massekonstanz unter Vakuum getrocknet. Es werden 9,3 g Ligninderivat B ausgewogen. Das Ligninderivat B hat eine Glastemperatur T_{g} von 133 °C, ein Gewichtsmittel des Molekulargewichts M_{w} von 18200 g/mol, eine Polydispersität P von 10 und weist ein Verhältnis von monovalentem Rest / divalentem Rest von 48% / 52% auf. Mit ¹³C-NMR-Spektroskopie wird bestimmt, dass 83 % der beiden funktionellen Endgruppen des Adipinsäuredichlorids mit L über eine Esterbindung verknüpft sind.

### Beispiel 3

10 g Laubholz-Lignin mit einem Reinheitsgrad von 99,5 Gew.-% werden bei 80 °C 16 Stunden lang im Vakuum über P₄O₁₀ getrocknet. Das getrocknete Lignin wird in 50 ml absolutem Dimethylacetamid gelöst und mit 7,308 g (72,22 mmol) Triethylamin versetzt. Es resultiert eine Lösung 1.

Separat dazu wird eine zweite Lösung wie folgt vorbereitet: 13,219 g (72,22 mmol) Adipinsäuredichlorid werden in 75 ml absolutem Dimethylacetamid gelöst. Zu dieser Lösung wird unter Inertgasatmosphäre, Eiswasserkühlung und intensivem Rühren eine Lösung von 2,748 g (36,11 mmol) wasserfreiem 1,3-Propandiol in 10 ml absolutem Dimethylacetamid getropft. Danach wird unter intensivem Rühren eine Lösung von 7,308 g (72,22 mmol) Triethylamin in 20 ml absolutem Dimethylacetamid hinzugetropft und 10 Minuten lang bei Raumtemperatur gerührt. Es resultiert eine Lösung 2.

Danach wird Lösung 1 in Lösung 2 schnell eingebracht und das entstehende Gemisch intensiv vermengt.

Nach 10 Minuten intensiver Vermischung von Lösung 1 mit Lösung 2 erfolgt die Zugabe eines Überschusses von Propionsäureanhydrid zusammen mit 0,5 g 1-Methylimidazol. Danach wird auf 50 °C erwärmt und der Reaktionsansatz zwei Stunden lang bei dieser Temperatur gerührt. Im Anschluss daran lässt man auf Raumtemperatur abkühlen, gibt die resultierende viskose Lösung in ca. 500 ml Ethanol, rührt eine Stunde lang und filtriert abschließend, wobei das Filtrat durch Eintropfen in Wasser auf Vollständigkeit der Fällung geprüft wird. Es resultiert ein Filterkuchen, der dreimal mit je 200 ml Ethanol/Wasser (9/1) in der Hitze ausgekocht, d.h. beim Siedepunkt des Ethanol/Wasser-Gemischs gereinigt wird und danach noch einmal mit Ethanol ausgekocht, d.h. beim Siedepunkt des Ethanols nachgereinigt wird. Nach Trocknung an Luft wird bis zu Massekonstanz unter Vakuum getrocknet. Es werden 9,7 g Ligninderivat C ausgewogen. Das Ligninderivat C hat eine sehr schwach ausgeprägte Glasübergangsstufe, ein Gewichtsmittel des Molekulargewichts M_{w} von 20600 g/mol, eine Polydispersität P von 11 und weist ein Verhältnis von monovalentem Rest / divalentem Rest von 50% / 50% auf. Das mit ¹³C-NMR-Spektroskopie bestimmte Verhältnis von Adipat/Propandiolat beträgt 1,7/1.

### Beispiel 4

10 g Laubholz-Lignin mit einem Reinheitsgrad von 99,5 Gew.-% werden bei 80 °C 16 Stunden lang im Vakuum über P₄O₁₀ getrocknet. Das getrocknete Lignin wird in 50 ml absolutem Dimethylacetamid gelöst und mit 7,308 g (72,22 mmol) Triethylamin versetzt. Es resultiert eine Lösung 1.

Separat dazu wird eine zweite Lösung wie folgt vorbereitet: 19,828 g (108,33 mmol) Adipinsäuredichlorid werden in 75 ml absolutem Dimethylacetamid gelöst. Zu dieser Lösung wird unter Inertgasatmosphäre, Eiswasserkühlung und intensivem Rühren eine Lösung von 5,495 g (72,22 mmol) wasserfreiem 1,3-Propandiol in 10 ml absolutem Dimethylacetamid getropft. Danach wird unter intensivem Rühren eine Lösung von 14,616 g (144,44 mmol) Triethylamin in 20 ml absolutem Dimethylacetamid hinzugetropft und 10 Minuten lang bei Raumtemperatur gerührt. Es resultiert eine Lösung 2.

Danach wird Lösung 1 in Lösung 2 schnell eingebracht und das entstehende Gemisch intensiv vermengt.

Nach 10 Minuten intensiver Vermischung von Lösung 1 mit Lösung 2 erfolgt die Zugabe eines Überschusses von Propionsäureanhydrid zusammen mit 0,5 g 1-Methylimidazol. Danach wird auf 50 °C erwärmt und der Reaktionsansatz zwei Stunden lang bei dieser Temperatur gerührt. Im Anschluss daran lässt man auf Raumtemperatur abkühlen, gibt die resultierende viskose Lösung in ca. 500 ml Ethanol, rührt eine Stunde lang und filtriert abschließend, wobei das Filtrat durch Eintropfen in Wasser auf Vollständigkeit der Fällung geprüft wird. Es resultiert ein Filterkuchen, der dreimal mit je 200 ml Ethanol/Wasser (9/1) in der Hitze ausgekocht, d.h. beim Siedepunkt des Ethanol/Wasser-Gemischs gereinigt wird und danach noch einmal mit Ethanol ausgekocht, d.h. beim Siedepunkt des Ethanols nachgereinigt wird. Nach Trocknung an Luft wird bis zu Massekonstanz unter Vakuum getrocknet. Es werden 12,3 g Ligninderivat D ausgewogen. Das Ligninderivat D hat eine sehr schwach ausgeprägte Glasübergangsstufe, ein Gewichtsmittel des Molekulargewichts M_{w} von 42500 g/mol, eine Polydispersität P von 15 und weist ein Verhältnis von monovalentem Rest / divalentem Rest von 47% / 53% auf. Das mit ¹³C-NMR-Spektroskopie bestimmte Verhältnis von Adipat / Propandiolat beträgt 1,39/1.

### Beispiel 5

Auf ähnliche Weise wie in den Beispielen 3 und 4 wird ein Ligninderivat E hergestellt. Das Ligninderivat E hat eine sehr schwach ausgeprägte Glasübergangsstufe, ein Gewichtsmittel des Molekulargewichts M_{w} von 36250 g/mol, eine Polydispersität P von 21,5 und weist ein Verhältnis von monovalentem Rest / divalentem Rest von 61% / 39% auf. Das mit ¹³C-NMR-Spektroskopie bestimmte Verhältnis von Adipat/Propandiolat beträgt 1,35/1.

Das Ligninderivat E wird in einem Labor-Zweischneckenextruder bei 110 °C und einer Umdrehungsgeschwindigkeit von 170 min⁻¹ durch eine Einlochdüse mit einem Lochdurchmesser von 500 µm zu einem Monofilament mit einem Durchmesser von 250 µm versponnen und - ohne zu brechen - aufgewickelt. Das Monofilament zeigt eine glatte Oberfläche und nach Kältebruch einen glatten Querschnitt. Dabei bedeutet "Kältebruch", dass das Monofilament in flüssigen Stickstoff eingetaucht und anschließend gebrochen wird.

Das Monofilament ist als Precursorfaser zur Herstellung einer Kohlenstoff-Faser geeignet, wie in den folgenden Beispielen gezeigt wird.

### Beispiel 6

Das thermoplastische Monofilament von Beispiel 5 wird durch thermische Oxidation zu einem nichtthermoplastischen Monofilament umgewandelt. Dazu wird das thermoplastische Monofilament auf eine Keramikplatte montiert, wobei die Enden des Monofilaments mit hochtemperaturfestem Keramikzement an der Keramikplate befestigt werden. Anschließend wird das Monofilament in einem Ofen unter Luft-Atmosphäre bei einer Aufheizgeschwindigkeit von 0,2 k/min bis auf eine Temperatur von 180 °C erwärmt und das Monofilament 12 Stunden bei dieser Temperatur gehalten. Danach lässt man den Ofen durch Abschalten der Heizung auf Raumtemperatur abkühlen. Es resultiert ein nichtthermoplastisches stabilisiertes Monofilament.

### Beispiel 7

Das stabilisierte Monofilament von Beispiel 6 wird auf eine Keramikplatte montiert, wobei die Enden des Monofilaments mit hochtemperaturfestem Keramikzement auf der Keramikplatte befestigt werden. Anschließend wird das Monofilament bei einer Aufheizgeschwindigkeit von 3 K/min bis zu einer Temperatur von 1100 °C aufgeheizt und 30 min lang bei dieser Temperatur gehalten. Danach lässt man den Ofen durch Abschalten der Heizung auf Raumtemperatur abkühlen. Es resultiert ein karbonisiertes Monofilament.

## Patentansprüche

1. Ligninderivat hergestellt aus einem Lignin der Summenformel (1)
L(OH)_{z} (1),
worin
L ein Lignin ohne Hydroxylgruppen,
OH die an L gebundenen freien Hydroxylgruppen und
z 100 % der an L gebundenen freien Hydroxylgruppen bedeutet,
**dadurch gekennzeichnet, dass** im Ligninderivat
x ≥ 0,1 % der an L gebundenen freien Hydroxylgruppen mit divalenten Resten Rₓ derivatisiert sind, die von einer Verbindung abgeleitet sind, die zwei funktionelle Gruppen besitzt, von denen zur Bildung des Ligninderivats überwiegend beide jeweils über eine Ester-, Ether- oder
Urethangruppe mit L verknüpft sind,
y ≥ 0,1 % der an L gebundenen freien Hydroxylgruppen mit monovalenten Resten Ryderivatisiert sind, die über eine Ester-, Ether- oder Urethangruppe mit L verknüpft sind,
x + y = 100 % und
z = 0 %
ist.

2. Ligninderivat gemäß Anspruch 1, **dadurch gekennzeichnet, dass** das Ligninderivat einer Glastemperatur T_{g} im Bereich von -30 °C bis 200 °C aufweist.

3. Ligninderivat gemäß Anspruch 1 oder 2, **dadurch gekennzeichnet, dass** das Ligninderivat ein Gewichtsmittel des Molekulargewichts M_{w} von mindestens 10 000 g/mol aufweist.

4. Ligninderivat gemäß einem oder mehreren der Ansprüche 1 bis 3, **dadurch gekennzeichnet, dass** x im Bereich von 1 % bis 99 % und y im Bereich von 99 % bis 1 % liegt.

5. Ligninderivat gemäß einem oder mehreren der Ansprüche 1 bis 4, **dadurch gekennzeichnet, dass** die divalenten Reste Rₓ von einer Verbindung abgeleitet sind, die zwei gleiche funktionelle Gruppen umfasst, von denen zur Bildung des Ligninderivats überwiegend beide jeweils über eine Ester-,
Ether- oder Urethanbindung mit L verknüpft sind.

6. Ligninderivat gemäß Anspruch 5, **dadurch gekennzeichnet, dass** mindestens 20 % der beiden gleichen funktionellen Gruppen jeweils über eine Ester-, Ether oder Urethangruppe mit L verknüpft sind.

7. Ligninderivat gemäß einem oder mehreren der Ansprüche 1 bis 6, **dadurch gekennzeichnet, dass** die divalenten Reste Rₓ von einer Dicarbonsäure oder von einem Dicarbonsäurechlorid abstammen, wobei mindestens eine Carbonsäuregruppe bzw. mindestens eine Carbonsäurechloridgruppe der Dicarbonsäure bzw. des Dicarbonsäurechlorids über eine Estergruppe mit L verknüpft ist.

8. Ligninderivat gemäß einem oder mehreren der Ansprüche 1 bis 6, **dadurch gekennzeichnet, dass** die divalenten Reste Rₓ von einem Oligoester mit zwei Carbonsäureendgruppen abstammen, wobei mindestens eine Carbonsäureendgruppe des Oligoesters über eine Estergruppe mit L verknüpft ist.

9. Ligninderivat gemäß einem oder mehreren der Ansprüche 1 bis 6, **dadurch gekennzeichnet, dass** die divalenten Reste Rₓ von einem Diisocyanat abstammen, wobei mindestens eine Isocyanatgruppe des Diisocyanats über eine Urethangruppe mit L verknüpft ist.

10. Ligninderivat gemäß einem oder mehreren der Ansprüche 1 bis 6, **dadurch gekennzeichnet, dass** die divalenten Reste Rₓ von einem Oligourethan mit zwei Isocyanatendgruppen abstammen, wobei mindestens eine Isocyanatendgruppe des Oligourethans über eine Urethangruppe mit L verknüpft ist.

11. Ligninderivat gemäß einem oder mehreren der Ansprüche 1 bis 10, **dadurch gekennzeichnet, dass** die monovalenten Reste R_{y} von einer Monocarbonsäure oder von einem Monoisocyanat abstammen, wobei die Monocarbonsäure über eine Estergruppe bzw. das Monoisocyanat über eine Urethangruppe mit L verknüpft ist.

12. Formkörper umfassend das Ligninderivat nach einem oder mehreren der Ansprüche 1 bis 11.

13. Formkörper gemäß Anspruch 12, **dadurch gekennzeichnet, dass** der Formkörper in Gestalt einer Faser vorliegt.

14. Formkörper gemäß Anspruch 13, **dadurch gekennzeichnet, dass** die Faser eine Precursorfaser zur Herstellung einer Kohlenstoff-Faser ist.

15. Formkörper gemäß Anspruch 12, **dadurch gekennzeichnet, dass** der Formkörper in Gestalt einer Membran vorliegt.

16. Formkörper gemäß Anspruch 15, **dadurch gekennzeichnet, dass** die Membran ein Batterieseparator ist.

## Claims

1. Lignin derivative produced from a lignin with the empirical formula (1)
L(OH)_{z} (1),
where
L is a lignin without hydroxyl groups,
OH are the free hydroxyl groups bonded to L and
z means 100% of the free hydroxyl groups bonded to L,
**characterised in that** in the lignin derivative
x ≥ 0.1 % of the free hydroxyl groups bonded to L are derivatised with divalent residues Rₓ that are derived from a compound having two functional groups, of which predominantly both are respectively bonded to L via an ester, ether or urethane group to form the lignin derivative,
y ≥ 0.1% of the free hydroxyl groups bonded to L are derivatised with monovalent residues R_{y} that are bonded to L via an ester, ether or urethane group,
x + y = 100% and
z = 0%.

2. Lignin derivative according to Claim 1, **characterised in that** the lignin derivative has a glass transition temperature Tg in the range from -30°C to 200 °C.

3. Lignin derivative according to Claim 1 or 2, **characterised in that** the lignin derivative has a weight-average molecular weight M_{w} of at least 10,000 g/mol.

4. Lignin derivative according to one or more of Claims 1 to 3, **characterised in that** x lies in the range from 1 % to 99% and y in the range from 99% to 1 %.

5. Lignin derivative according to one or more of Claims 1 to 4, **characterised in that** the divalent residues Rₓ are derived from a compound comprising two identical functional groups, of which predominantly both are respectively bonded to L via an ester, ether or urethane group to form the lignin derivative.

6. Lignin derivative according to Claim 5, **characterised in that** at least 20% of the two identical functional groups are respectively bonded to L via an ester, ether or urethane group.

7. Lignin derivative according to one or more of Claims 1 to 6, **characterised in that** the divalent residues Rₓ come from a dicarboxylic acid or dicarboxylic acid chloride, wherein at least one carboxylic acid group or at least one carboxylic acid chloride group of the dicarboxylic acid or dicarboxylic acid chloride, respectively, is bonded to L via an ester group.

8. Lignin derivative according to one or more of Claims 1 to 6, **characterised in that** the divalent residues Rₓ come from an oligoester with two carboxylic acid end groups, wherein at least one carboxylic acid end group of the oligoester is bonded to L via an ester group.

9. Lignin derivative according to one or more of Claims 1 to 6, **characterised in that** the divalent residues Rₓ come from a diisocyanate, wherein at least one isocyanate group of the diisocyanate is bonded to L via a urethane group.

10. Lignin derivative according to one or more of Claims 1 to 6, **characterised in that** the divalent residues Rₓ come from an oligourethane with two isocyanate end groups, wherein at least one isocyanate end group of the oligourethane is bonded to L via a urethane group.

11. Lignin derivative according to one or more of Claims 1 to 10, **characterised in that** the monovalent residues R_{y} come from a monocarboxylic acid or from a monoisocyanate, wherein the monocarboxylic acid is bonded to L via an ester group or the monoisocyanate is bonded to L via a urethane group.

12. Shaped body comprising the lignin derivative according to one or more of Claims 1 to 11.

13. Shaped body according to Claim 12, **characterised in that** the shaped body takes the form of a fibre.

14. Shaped body according to Claim 13, **characterised in that** the fibre is a precursor fibre for the production of a carbon fibre.

15. Shaped body according to Claim 12, **characterised in that** the shaped body takes the form of a membrane.

16. Shaped body according to Claim 15, **characterised in that** the membrane is a battery separator.

## Revendications

1. Dérivé de lignine, préparé à partir d'une lignine de formule globale (1) :
L(OH)_{z} (1)
dans laquelle
- L représente une lignine, sans ses groupes hydroxyle,
- OH représente les groupes hydroxyle libres liés à la lignine L,
- et l'indice z représente 100 % des groupes hydroxyle libres liés à la lignine L,
**caractérisé en ce que**, dans ce dérivé de lignine,
- une fraction x, supérieure ou égale à 0,1 %, des groupes hydroxyle libres liés à la lignine L se trouvent à l'état de dérivés formés avec des groupes divalents Rₓ qui dérivent d'un composé possédant deux groupes fonctionnels dont, pour la formation du dérivé de lignine, les deux, pour la plupart, sont rattachés à la lignine L, chacun par l'intermédiaire d'un groupe de type ester, éther ou uréthane,
- une fraction y, supérieure ou égale à 0,1 %, des groupes hydroxyle libres liés à la lignine L se trouvent à l'état de dérivés formés avec des groupes monovalents R_{y} qui sont rattachés à la lignine L, par l'intermédiaire d'un groupe de type ester, éther ou uréthane,
- la somme x + y vaut 100 %,
- et z vaut 0 %.

2. Dérivé de lignine conforme à la revendication 1, **caractérisé en ce que** le dérivé de lignine présente une température de transition vitreuse Tᵥ située dans l'intervalle allant de -30 °C à 200 °C.

3. Dérivé de lignine conforme à la revendication 1 ou 2, **caractérisé en ce que** le dérivé de lignine présente une masse molaire moyenne en poids valant au moins 10 000 g/mol.

4. Dérivé de lignine, conforme à l'une ou plusieurs des revendications 1 à 3, **caractérisé en ce que** la fraction x se situe dans l'intervalle allant de 1 % à 99 % et la fraction y se situe dans l'intervalle allant de 99 % à 1 %.

5. Dérivé de lignine, conforme à l'une ou plusieurs des revendications 1 à 4, **caractérisé en ce que** les groupes divalents Rₓ dérivent d'un composé comportant deux groupes fonctionnels identiques dont, pour la formation du dérivé de lignine, les deux, pour la plupart, sont rattachés à la lignine L, chacun par l'intermédiaire d'un groupe de type ester, éther ou uréthane.

6. Dérivé de lignine, conforme à la revendication 5, **caractérisé en ce qu'**au moins 20 % des deux groupes fonctionnels identiques sont rattachés à la lignine L, chacun par l'intermédiaire d'un groupe de type ester, éther ou uréthane.

7. Dérivé de lignine, conforme à l'une ou plusieurs des revendications 1 à 6, **caractérisé en ce que** les groupes divalents Rₓ dérivent d'un acide dicarboxylique ou d'un chlorure d'acide dicarboxylique, étant entendu qu'au moins un groupe carboxyle de cet acide dicarboxylique, ou au moins un groupe chloro-carbonyle de ce chlorure d'acide dicarboxylique, est rattaché à la lignine L par l'intermédiaire d'un groupe de type ester.

8. Dérivé de lignine, conforme à l'une ou plusieurs des revendications 1 à 6, **caractérisé en ce que** les groupes divalents Rₓ dérivent d'un oligo-ester doté de deux groupes carboxyle terminaux, étant entendu qu'au moins un groupe carboxyle terminal de cet oligo-ester est rattaché à la lignine L par l'intermédiaire d'un groupe de type ester.

9. Dérivé de lignine, conforme à l'une ou plusieurs des revendications 1 à 6, **caractérisé en ce que** les groupes divalents Rₓ dérivent d'un diisocyanate, étant entendu qu'au moins un groupe isocyanate de ce diisocyanate est rattaché à la lignine L par l'intermédiaire d'un groupe de type uréthane.

10. Dérivé de lignine, conforme à l'une ou plusieurs des revendications 1 à 6, **caractérisé en ce que** les groupes divalents Rₓ dérivent d'un oligo-uréthane doté de deux groupes isocyanate terminaux, étant entendu qu'au moins un groupe isocyanate terminal de cet oligo-uréthane est rattaché à la lignine L par l'intermédiaire d'un groupe de type uréthane.

11. Dérivé de lignine, conforme à l'une ou plusieurs des revendications 1 à 10, **caractérisé en ce que** les groupes monovalents R_{y} dérivent d'un acide monocarboxylique ou d'un monoisocyanate, étant entendu que cet acide monocarboxylique est rattaché à la lignine L par l'intermédiaire d'un groupe de type ester, ou bien que ce monoisocyanate est rattaché à la lignine L par l'intermédiaire d'un groupe de type uréthane.

12. Corps façonné comprenant un dérivé de lignine conforme à l'une ou plusieurs des revendications 1 à 11.

13. Corps façonné conforme à la revendication 12, **caractérisé en ce que** ce corps façonné se présente sous forme d'une fibre.

14. Corps façonné conforme à la revendication 13, **caractérisé en ce que** la fibre est une fibre précurseur destinée à la préparation d'une fibre de carbone.

15. Corps façonné conforme à la revendication 12, **caractérisé en ce que** ce corps façonné se présente sous forme d'une membrane.

16. Corps façonné conforme à la revendication 15, **caractérisé en ce que** la membrane est un séparateur de batterie.
